# EUROPEAN PATENT APPLICATION

(11) **EP 4 797 581 A1**
(43) Date of publication of application: **26.08.2026**
(21) Application number: 24887791.2
(22) Date of filing: 28.10.2024
(51) Int. Cl.: H04L 1/00

(54) **COMMUNICATION METHOD, COMMUNICATION DEVICE, COMMUNICATION APPARATUS, AND COMPUTER-READABLE STORAGE MEDIUM**

(30) Priority: 08.11.2023 CN 202311489561
(71) Applicant: HUAWEI TECHNOLOGIES CO., LTD., Shenzhen 518129 (CN)
(72) Inventor: TONG, Jiajie, Shenzhen, Guangdong 518129 (CN); WANG, Xianbin, Shenzhen, Guangdong 518129 (CN); QIN, Kangjian, Shenzhen, Guangdong 518129 (CN); ZHANG, Huazi, Shenzhen, Guangdong 518129 (CN); LIU, Ke, Shenzhen, Guangdong 518129 (CN); WANG, Jun, Shenzhen, Guangdong 518129 (CN)
(74) Representative: Gill Jennings & Every LLP
(86) International application number: PCT/CN2024/127750
(87) International publication number: WO 2025/098178

(57) **Abstract**

The present disclosure relates to a communication method, a communication device, a communication apparatus, and a computer-readable storage medium. The method includes: performing an initial transmission of an information bit sequence based on a first polar code of the information bit sequence; determining a start position for a first retransmission of the information bit sequence from a plurality of start positions for the first retransmission; if the start position for the first retransmission is a first start position associated with a second polar code of the information bit sequence, generating the second polar code, and performing the first retransmission of the information bit sequence based on at least one of the second polar code or the first polar code; and performing the first retransmission of the information bit sequence based on the first polar code if the start position for the first retransmission is a start position associated with the first polar code. In this way, a start position for a retransmission can be flexibly selected, and different cyclic ranges for the retransmission can be determined based on different start positions. Therefore, a rate matching process for the retransmission can be simplified, making retransmission performance stable.

## Description

### TECHNICAL FIELD

The present disclosure relates to the communication field, and more specifically, to a communication method, a communication device, a communication apparatus, a computer-readable storage medium, and a computer program product for polar code (Polar code) transmission.

### BACKGROUND

Due to excellent error correction performance and low decoding complexity, polar codes have already been adopted as coding scheme for control channels in some communication scenarios. In hybrid automatic repeat request (Hybrid Automatic Repeat Request, HARQ) transmission, forward error correction (Forward Error Correction, FEC) codes and automatic repeat request (Automatic Repeat Request, ARQ) codes are used in combination to improve spectral efficiency. When polar codes are used as FEC codes in HARQ, rate matching needs to be performed to adapt to scheduling of transmission resources. However, existing rate matching schemes are complex, resulting in unstable retransmission performance.

### SUMMARY

In view of the foregoing problem, embodiments of the present disclosure are intended to provide a communication solution, to simplify a rate matching process for retransmission, making retransmission performance stable.

According to a first aspect of embodiments of the present disclosure, a communication method is provided. The method may be performed by a communication device (for example, a sending device). The method includes: performing an initial transmission of an information bit sequence based on a first polar code of the information bit sequence; determining a start position for a first retransmission of the information bit sequence from a plurality of start positions for the first retransmission; if the start position for the first retransmission is a first start position associated with a second polar code of the information bit sequence, generating the second polar code, and performing the first retransmission of the information bit sequence based on at least one of the second polar code or the first polar code; and performing the first retransmission of the information bit sequence based on the first polar code if the start position for the first retransmission is a start position associated with the first polar code. In this way, a start position for a retransmission can be selected, and different vs for the retransmission are determined based on different start positions. Therefore, a rate matching process for the retransmission can be simplified, so that retransmission sending performance is stable.

In some embodiments, the method may further include: after the second polar code is generated, performing a second retransmission of the information bit sequence based on at least one of the second polar code or the first polar code for the second retransmission of the information bit sequence. Therefore, a cyclic range for a retransmission can be determined in a constructed polar code.

In some embodiments, a transmission length of the first retransmission may be less than a distance between the first start position and a second start position, and the second start position is associated with the second polar code. In these embodiments, generating the second polar code may include: generating a first part of the second polar code. The first part is between the first start position and the second start position. Performing the first retransmission of the information bit sequence based on at least one of the second polar code or the first polar code may include: determining a transmission sequence for the first retransmission based on the first start position and the transmission length by cycling between the first part of the second polar code and the first polar code. Therefore, a polar code can be allowed to be reconstructed for a plurality of times, to gradually obtain a long code gain, so that a system runs stably. In addition, a long code gain loss caused by directly constructing an excessively long code in a case in which a quantity of information bits of a retransmission is small may be avoided.

In some embodiments, the method may further include: after the first retransmission, determining to perform a third retransmission of the information bit sequence, where a start position for the third retransmission is the second start position, a transmission length of the third retransmission is less than a distance between the second start position and a third start position, and the third start position is associated with the second polar code; generating a second part of the second polar code, where the second part is between the second start position and the third start position; and determining a transmission sequence for the third retransmission based on the second start position and the transmission length of the third retransmission by cycling between the second part of the second polar code, the first polar code, and the first part of the second polar code. Therefore, a polar code can be gradually constructed, to gradually obtain a long code gain, so that a system runs stably. In addition, a long code gain loss caused by directly constructing an excessively long code in a case in which a quantity of information bits of a retransmission is small may be avoided.

In some embodiments, a transmission length of the first retransmission is less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. In these embodiments, performing the first retransmission of the information bit sequence based on at least one of the second polar code or the first polar code may include: determining a transmission sequence for the first retransmission based on the first start position and the transmission length by cycling between a first subpart of a first part of the second polar code and the first polar code. The first subpart is between the first start position and a last start position that is reachable by the transmission length in the second group of start positions. Therefore, while being compatible with a flexible scheduling requirement of a rateless code (rateless code), a polar code can be reconstructed for a plurality of times, to gradually obtain a long code gain.

In some embodiments, a transmission length of the first retransmission is greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. In these embodiments, performing the first retransmission of the information bit sequence based on at least one of the second polar code or the first polar code may include: determining the transmission sequence for the first retransmission based on the first start position and the transmission length by cycling between the second polar code and the first polar code. Therefore, while being compatible with a flexible scheduling requirement of a rateless code, a polar code can be gradually constructed, and a long code gain can be gradually obtained.

In some embodiments, a start position for each retransmission in a group of retransmissions of the information bit sequence may be configured by a network; or a start position for each retransmission in the group of retransmissions may be selected from the plurality of start positions based on at least one of a code rate or a puncturing ratio of the information bit sequence, and the plurality of start positions include at least one of at least one start position associated with the first polar code or at least one start position associated with the second polar code. Therefore, a start position for a retransmission may be flexibly selected.

In some embodiments, performing the first retransmission of the information bit sequence based on the first polar code may include: determining a transmission sequence for the first retransmission based on the start position and a transmission length of the retransmission by cycling over the first polar code. Performing the first retransmission of the information bit sequence based on at least one of the second polar code or the first polar code may include: determining a transmission sequence for the first retransmission based on the first start position and the transmission length by cycling between the second polar code and the first polar code. Therefore, a transmission sequence for retransmission can be determined based on a start position, a transmission length, and a cyclic range.

According to a second aspect of embodiments of the present disclosure, a communication method is provided. The method may be performed by a communication device (for example, a receiving device). The method includes: receiving an initial transmission of an information bit sequence based on a first polar code of the information bit sequence; determining a start position for a first retransmission of the information bit sequence from a plurality of start positions for the first retransmission; if the start position for the first retransmission is a first start position associated with a second polar code of the information bit sequence, generating the second polar code, and receiving the first retransmission of the information bit sequence based on at least one of the second polar code or the first polar code; and receiving the first retransmission of the information bit sequence based on the first polar code if the start position for the first retransmission is a start position associated with the first polar code. In this way, a start position for a retransmission can be selected, and different cyclic ranges for the retransmission are determined based on different start positions. Therefore, a rate matching process for the retransmission can be simplified, making retransmission performance stable.

In some embodiments, the method may further include: after the second polar code is generated, receiving a second retransmission of the information bit sequence based on at least one of the second polar code or the first polar code for the second retransmission of the information bit sequence. Therefore, a cyclic range for a retransmission can be determined in a constructed polar code.

In some embodiments, a transmission length of the first retransmission is less than a distance between the first start position and a second start position, and the second start position is associated with the second polar code. In these embodiments, generating the second polar code may include: generating a first part of the second polar code. The first part is between the first start position and the second start position. Receiving the first retransmission of the information bit sequence based on at least one of the second polar code or the first polar code may include: determining a transmission sequence for the first retransmission based on the first start position and the transmission length by cycling between the first part of the second polar code and the first polar code. Therefore, a polar code can be allowed to be reconstructed for a plurality of times, to gradually obtain a long code gain, so that a system runs stably. In addition, a long code gain loss caused by directly constructing an excessively long code in a case in which a quantity of information bits of a retransmission is small may be avoided.

In some embodiments, the method may further include: after the first retransmission, determining to receive a third retransmission of the information bit sequence, where a start position for the third retransmission is the second start position, a transmission length of the third retransmission is less than a distance between the second start position and a third start position, and the third start position is associated with the second polar code; generating a second part of the second polar code, where the second part is between the second start position and the third start position; and determining a transmission sequence for the third retransmission based on the second start position and the transmission length of the third retransmission by cycling between the second part of the second polar code, the first polar code, and the first part of the second polar code. Therefore, a polar code can be gradually constructed, to gradually obtain a long code gain, so that a system runs stably. In addition, a long code gain loss caused by directly constructing an excessively long code in a case in which a quantity of information bits of a retransmission is small may be avoided.

In some embodiments, a transmission length of the first retransmission is less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. In these embodiments, receiving the first retransmission of the information bit sequence based on at least one of the second polar code or the first polar code may include: determining a transmission sequence for the first retransmission based on the first start position and the transmission length by cycling between a first subpart of a first part of the second polar code and the first polar code. The first subpart is between the first start position and a last start position that is reachable by the transmission length in the second group of start positions. Therefore, while being compatible with a flexible scheduling requirement of a rateless code, a polar code can be reconstructed for a plurality of times, to gradually obtain a long code gain.

In some embodiments, a transmission length of the first retransmission is greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. In these embodiments, receiving the first retransmission of the information bit sequence based on at least one of the second polar code or the first polar code may include: determining the transmission sequence for the first retransmission based on the first start position and the transmission length by cycling between the second polar code and the first polar code. Therefore, while being compatible with a flexible scheduling requirement of a rateless code, a polar code can be gradually constructed, and a long code gain can be gradually obtained.

In some embodiments, a start position for each retransmission in a group of retransmissions of the information bit sequence may be configured by a network; or a start position for each retransmission in the group of retransmissions may be selected from the plurality of start positions based on at least one of a code rate or a puncturing ratio of the information bit sequence, and the plurality of start positions include at least one of at least one start position associated with the first polar code or at least one start position associated with the second polar code. Therefore, a start position for a retransmission may be flexibly selected.

In some embodiments, receiving the first retransmission of the information bit sequence based on the first polar code may include: determining a transmission sequence for the first retransmission based on the start position and a transmission length of the retransmission by cycling over the first polar code. Receiving the first retransmission of the information bit sequence based on at least one of the second polar code or the first polar code may include: determining a transmission sequence for the first retransmission based on the first start position and the transmission length by cycling between the second polar code and the first polar code. Therefore, a transmission sequence for a retransmission can be determined based on a start position, a transmission length, and a cyclic range.

According to a third aspect of embodiments of the present disclosure, a communication apparatus is provided. The apparatus includes: a first execution component, configured to perform an initial transmission of an information bit sequence based on a first polar code of the information bit sequence; a start position determining component, configured to determine a start position for a first retransmission of the information bit sequence from a plurality of start positions for the first retransmission; a second execution component, configured to: if the start position for the first retransmission is a first start position associated with a second polar code of the information bit sequence, generate the second polar code, and perform the first retransmission of the information bit sequence based on at least one of the second polar code or the first polar code; and a third execution component, configured to perform the first retransmission of the information bit sequence based on the first polar code if the start position for the first retransmission is a start position associated with the first polar code.

In some embodiments, the apparatus may further include: a fourth execution component, configured to: after the second polar code is generated, perform a second retransmission of the information bit sequence based on at least one of the second polar code or the first polar code for the second retransmission of the information bit sequence.

In some embodiments, a transmission length of the first retransmission may be less than a distance between the first start position and a second start position, and the second start position is associated with the second polar code. In these embodiments, the second execution component may include: a generation component, configured to generate a first part of the second polar code, where the first part is between the first start position and the second start position; and a first sequence determining component, configured to determine a transmission sequence for the first retransmission based on the first start position and the transmission length by cycling between the first part of the second polar code and the first polar code.

In some embodiments, the apparatus may further include: a fifth execution component, configured to: after the first retransmission, determine to perform a third retransmission of the information bit sequence, where a start position for the third retransmission is the second start position, a transmission length of the third retransmission is less than a distance between the second start position and a third start position, and the third start position is associated with the second polar code; generate a second part of the second polar code, where the second part is between the second start position and the third start position; and determine a transmission sequence for the third retransmission based on the second start position and the transmission length of the third retransmission by cycling between the second part of the second polar code, the first polar code, and the first part of the second polar code.

In some embodiments, a transmission length of the first retransmission is less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. In these embodiments, the second execution component may include: a second sequence determining component, configured to determine a transmission sequence for the first retransmission based on the first start position and the transmission length by cycling between a first subpart of a first part of the second polar code and the first polar code. The first subpart is between the first start position and a last start position that is reachable by the transmission length in the second group of start positions.

In some embodiments, a transmission length of the first retransmission is greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. In these embodiments, the second execution component may include: a third sequence determining component, configured to determine the transmission sequence for the first retransmission based on the first start position and the transmission length by cycling between the second polar code and the first polar code.

In some embodiments, a start position for each retransmission in a group of retransmissions of the information bit sequence may be configured by a network; or a start position for each retransmission in the group of retransmissions may be selected from the plurality of start positions based on at least one of a code rate or a puncturing ratio of the information bit sequence, and the plurality of start positions include at least one of at least one start position associated with the first polar code or at least one start position associated with the second polar code.

In some embodiments, the third execution component may include: a fourth sequence determining component, configured to determine a transmission sequence for the first retransmission based on the start position and a transmission length of the retransmission by cycling over the first polar code. The second execution component may include: a fifth sequence determining component, configured to determine a transmission sequence for the first retransmission based on the first start position and the transmission length by cycling between the second polar code and the first polar code. Therefore, a transmission sequence for retransmission can be determined based on a start position, a transmission length, and a cyclic range.

According to a fourth aspect of embodiments of the present disclosure, a communication apparatus is provided. The apparatus includes: a first receiving component, configured to receive an initial transmission of an information bit sequence based on a first polar code of the information bit sequence; a start position determining component, configured to determine a start position for a first retransmission of the information bit sequence from a plurality of start positions for the first retransmission; a second receiving component, configured to: if the start position for the first retransmission is a first start position associated with a second polar code of the information bit sequence, generate the second polar code, and receive the first retransmission of the information bit sequence based on at least one of the second polar code or the first polar code; and a third receiving component, configured to receive the first retransmission of the information bit sequence based on the first polar code if the start position for the first retransmission is a start position associated with the first polar code.

In some embodiments, the apparatus may further include: a fourth receiving component, configured to: after the second polar code is generated, receive a second retransmission of the information bit sequence based on at least one of the second polar code or the first polar code for the second retransmission of the information bit sequence.

In some embodiments, a transmission length of the first retransmission is less than a distance between the first start position and a second start position, and the second start position is associated with the second polar code. In these embodiments, the second receiving component may include: a generation component, configured to generate a first part of the second polar code, where the first part is between the first start position and the second start position; and a first sequence determining component, configured to determine a transmission sequence for the first retransmission based on the first start position and the transmission length by cycling between the first part of the second polar code and the first polar code.

In some embodiments, the apparatus may further include: a fifth receiving component, configured to: after the first retransmission, determine to receive a third retransmission of the information bit sequence, where a start position for the third retransmission is the second start position, a transmission length of the third retransmission is less than a distance between the second start position and a third start position, and the third start position is associated with the second polar code; generate a second part of the second polar code, where the second part is between the second start position and the third start position; and determine a transmission sequence for the third retransmission based on the second start position and the transmission length of the third retransmission by cycling between the second part of the second polar code, the first polar code, and the first part of the second polar code.

In some embodiments, a transmission length of the first retransmission is less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. In these embodiments, the second receiving component may include: a second sequence determining component, configured to determine a transmission sequence for the first retransmission based on the first start position and the transmission length by cycling between a first subpart of a first part of the second polar code and the first polar code. The first subpart is between the first start position and a last start position that is reachable by the transmission length in the second group of start positions.

In some embodiments, a transmission length of the first retransmission is greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. In these embodiments, the second receiving component may include: a third sequence determining component, configured to determine the transmission sequence for the first retransmission based on the first start position and the transmission length by cycling between the second polar code and the first polar code.

In some embodiments, a start position for each retransmission in a group of retransmissions of the information bit sequence may be configured by a network; or a start position for each retransmission in the group of retransmissions may be selected from the plurality of start positions based on at least one of a code rate or a puncturing ratio of the information bit sequence, and the plurality of start positions include at least one of at least one start position associated with the first polar code or at least one start position associated with the second polar code.

In some embodiments, the third receiving component may include: a fourth sequence determining component, configured to determine a transmission sequence for the first retransmission based on the start position and a transmission length of the retransmission by cycling over the first polar code. The second receiving component may include: a fifth sequence determining component, configured to determine a transmission sequence for the first retransmission based on the first start position and the transmission length by cycling between the second polar code and the first polar code.

According to a fifth aspect of embodiments of the present disclosure, a communication device is provided. The device includes a processor and a memory. The memory includes computer program code, and when the computer program code is run by the processor, the method according to the first aspect or the second aspect is performed.

According to a sixth aspect of embodiments of the present disclosure, a computer-readable storage medium is provided. The computer-readable storage medium includes machine-executable instructions, and when the machine-executable instructions are executed by a device, the method according to the first aspect or the second aspect is performed.

According to a seventh aspect of embodiments of the present disclosure, a chip is provided, including a memory and a processor. The memory is configured to store a computer program, and the processor is configured to invoke the computer program from the memory and run the computer program, to perform the method according to the first aspect or the second aspect.

According to an eighth aspect of embodiments of the present disclosure, a computer program product is provided. The computer program product includes computer program code, and when the computer program code is executed by a device, the method according to the first aspect or the second aspect is performed.

According to a ninth aspect of embodiments of the present disclosure, a communication system is provided. The communication system includes a sending device and a receiving device. The sending device sends an information bit sequence by performing the method according to the first aspect. The receiving device receives an information bit sequence by performing the method according to the second aspect.

It will be understood from the following descriptions of the example embodiments that according to the technical solutions proposed herein, a plurality of start positions for retransmission are defined, and a corresponding cyclic range for the retransmission is determined based on the start positions, thereby simplifying a rate matching process for the retransmission, making retransmission performance stable. In addition, a long code gain can be ensured, thereby implementing a reliable transmission.

It should be understood that the content described in the summary is not intended to limit key or important features of embodiments of the present disclosure or limit the scope of the present disclosure. Other features of the present disclosure will be readily understood through the following description.

### BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.
FIG. 1 is a diagram of an example communication system in which embodiments of the present disclosure may be implemented;
FIG. 2 is a diagram of an information transmission procedure in which embodiments of the present disclosure may be implemented;
FIG. 3A is a diagram of an example polar code in which embodiments of the present disclosure may be implemented;
FIG. 3B is a diagram of an example incremental redundant HARQ (incremental redundancy-HARQ, IR-HARQ) transmission of a polar code in which embodiments of the present disclosure may be implemented;
FIG. 4 is a diagram of a communication process according to an embodiment of the present disclosure;
FIG. 5A is a diagram of a time domain of an example start position according to an embodiment of the present disclosure;
FIG. 5B is a diagram of an example cyclic range according to an embodiment of the present disclosure;
FIG. 5C is a diagram of another example cyclic range according to an embodiment of the present disclosure;
FIG. 6A is a diagram of a time domain of an example retransmission according to an embodiment of the present disclosure;
FIG. 6B is a diagram of a time domain of another example retransmission according to an embodiment of the present disclosure;
FIG. 6C is a diagram of a time domain of another example retransmission according to an embodiment of the present disclosure;
FIG. 6D is a diagram of a time domain of another example retransmission according to an embodiment of the present disclosure;
FIG. 6E is a diagram of a cyclic range of the example retransmission in FIG. 6D;
FIG. 6F is a diagram of a time domain of another example retransmission according to an embodiment of the present disclosure;
FIG. 6G is a diagram of a cyclic range of the example retransmission in FIG. 6F;
FIG. 7 is a flowchart of a communication method according to an embodiment of the present disclosure;
FIG. 8 is a flowchart of another communication method according to an embodiment of the present disclosure;
FIG. 9 is a block diagram of a communication apparatus according to an embodiment of the present disclosure;
FIG. 10 is a block diagram of another communication apparatus according to an embodiment of the present disclosure; and
FIG. 11 is a simplified block diagram of a communication device suitable for implementing embodiments of the present disclosure.

### DESCRIPTION OF EMBODIMENTS

The following describes embodiments of the present disclosure in more detail with reference to accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. The following may further include other explicit and implied definitions.

It should be understood that in the technical solutions provided in embodiments of this application, some repeated parts may not be described again in the following descriptions of specific embodiments, but it should be considered that these specific embodiments are mutually referenced and may be combined.

The term "circuit" used herein refers to one or more of the following:
(a) a hardware circuit implementation only (such as implementations of analog and/or digital circuits only);
(b) a combination of hardware circuit and software, for example (if applicable): (i) a combination of analog and/or digital hardware circuits and software/firmware, and (ii) any part of a hardware processor and software (including a digital signal processor, software, and a memory that operate together to enable an apparatus like an optical line terminal (optical line terminal, OLT) or another computing device to perform various functions); and
(c) a hardware circuit and/or a processor, such as a microprocessor or a part of a microprocessor, which requires software (such as firmware) for operation, but may not have software when software is not required for operation.

The definition of a circuit is applicable to all scenarios of use of the term in this application (including any claim). As another example, the term "circuit" used herein also covers implementations of only a hardware circuit or processor (or a plurality of processors), a part of a hardware circuit or processor, or software or firmware accompanying a hardware circuit or processor. For example, if applicable to a particular claim element, the term "circuit" further covers a baseband integrated circuit, a processor integrated circuit, an OLT, or a similar integrated circuit in another computing device.

As mentioned above, when a hybrid automatic repeat is performed by using a polar code as an FEC code, a current rate matching scheme is too complex, resulting in unstable retransmission performance.

In view of this, an embodiment of the present disclosure provides a communication solution. In an aspect of this solution, a communication device (for example, a sending device) performs an initial transmission of an information bit sequence based on a first polar code of the information bit sequence. The communication device determines a start position for a first retransmission of the information bit sequence from a plurality of start positions for the first retransmission. If the start position for the first retransmission is a first start position associated with a second polar code of the information bit sequence, the communication device generates the second polar code, and performs the first retransmission of the information bit sequence based on at least one of the second polar code or the first polar code. The communication device performs the first retransmission of the information bit sequence based on the first polar code if the start position for the first retransmission is a start position associated with the first polar code.

In another aspect of this solution, a communication device (for example, a receiving device) receives an initial transmission of an information bit sequence based on a first polar code of the information bit sequence. The communication device determines a start position for a first retransmission of the information bit sequence from a plurality of start positions for the first retransmission. If the start position for the first retransmission is a first start position associated with a second polar code of the information bit sequence, the communication device generates the second polar code, and receives the first retransmission of the information bit sequence based on at least one of the second polar code or the first polar code. The communication device receives the first retransmission of the information bit sequence based on the first polar code if the start position for the first retransmission is a start position associated with the first polar code.

According to this solution, a start position for a retransmission can be flexibly selected, and different cyclic ranges for the retransmission can be determined based on different start positions. Therefore, a rate matching process for the retransmission can be simplified, making retransmission performance stable.

For ease of understanding, the following describes this solution in detail with reference to the accompanying drawings.

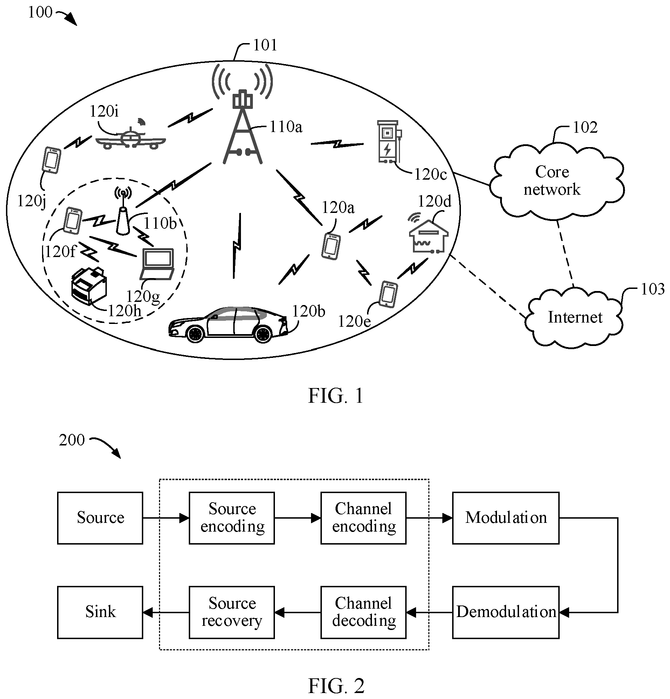

FIG. 1 is a diagram of an example communication system 100 in which embodiments of the present disclosure may be implemented. It should be understood that FIG. 1 is a diagram of a possible and non-limiting system. As shown in FIG. 1, the communication system 100 includes a radio access network (radio access network, RAN) 101 and a core network (core network, CN) 102. Optionally, the communication system 100 may further include the Internet 103. The RAN 101 includes at least one RAN node (for example, 110a and 110b in FIG. 1, which are collectively referred to as 110) and at least one terminal (for example, 120a to 120j in FIG. 1, which are collectively referred to as 120). The RAN 101 may further include other RAN nodes, for example, a wireless relay device and/or a wireless backhaul device (not shown in FIG. 1). The terminal 120 is connected to the RAN node 110 in a wireless manner. The RAN node 110 is connected to the core network 102 in a wireless or wired manner. A core network device in the core network 102 and the RAN node 110 in the RAN 101 may be different physical devices, or may be a same physical device that integrates core network logical functions and radio access network logical functions, or one device may integrate some of the core network logical functions and some of the radio access network logical functions. The terminals may be connected to each other in a wired or wireless manner and the RAN nodes may be connected to each other in a wired or wireless manner. FIG. 1 is merely a diagram. The communication system may further include another network device, for example, may further include a relay device and a backhaul device, which are not shown in FIG. 1.

The RAN 101 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 101 may alternatively be an open access network (open RAN, O-RAN or ORAN), a cloud radio access network (cloud radio access network, CRAN), or a wireless fidelity (wireless fidelity, Wi-Fi) system. The RAN 101 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. A plurality of RAN nodes 110 in the communication system 100 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 101 via the network element 120i, the network element 120i is a base station. However, for the base station 110a, the network element 120i is a terminal. Sometimes, the RAN node 110 and the terminal 120 are both referred to as communication devices. For example, the network elements 110a and 110b in FIG. 1 may be understood as communication devices having a base station function, and the network elements 120a to 120j may be understood as communication devices having a terminal function.

In a possible scenario, the RAN node may be a base station (base station, BS), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, the baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A specific technology and a specific device form that are used by the RAN node are not limited in embodiments of this application.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The core network 102 may include one or more core network devices (not shown). Examples of the core network device include but are not limited to a session management function (session management function, SMF), an access management function (access management function, AMF), a policy control function (policy control function, PCF), a user plane function (user plane function, UPF), a network exposure function (network exposure function, NEF), or an application function (application function, AF).

The Internet 103 may include one or more servers (not shown) configured to provide various different services.

It should be understood that a quantity of devices in FIG. 1 are provided for the purpose of description, and does not imply any limitation to this application. The communication system 100 may include any appropriate quantity of access network devices and/or core network devices and/or terminal devices that are suitable for implementing this application. In addition, the communication system 100 may include more additional components that are not shown, or some shown components may be omitted. This is not limited in embodiments of this application. An implementation of the communication system 100 is also not limited to the specific examples described above, but the communication system 100 may be implemented in any appropriate manner.

A communication device in the communication system 100 may be compatible with any suitable standard, including but not limited to a global system for mobile communication (global system for mobile communication, GSM), long term evolution (long term evolution, LTE), LTE evolution, LTE-advanced (LTE-advanced, LTE-A), wideband code division multiple access (wideband code division multiple access, WCDMA), a code division multiple access (code division multiple access, CDMA) system, or an enhanced data rate for GSM evolution (enhanced data rate for GSM evolution, EDGE) system. In addition, the communication device in the communication system 100 may perform communication based on a communication protocol of any generation of standard to be developed in the future, for example, a sixth generation (sixth generation, 6G) communication protocol. An example of the communication protocol includes but is not limited to a first generation (first generation, 1G), second generation (second generation, 2G), 2.5G, 2.75G, third generation (third generation, 3G), fourth generation (fourth generation, 4G), 4.5G, fifth generation (fifth generation, 5G), or sixth generation communication protocol.

Embodiments of the present disclosure may be applied to any communication device in the communication system 100, for example, a terminal 120, a RAN node 110, a core network device, or a server. In other words, embodiments of the present disclosure may be applied to a sending device and/or a receiving device in an information transmission process.

FIG. 2 is a diagram 200 of an information transmission procedure in which embodiments of the present disclosure may be implemented. As shown in FIG. 2, information is sent by a source, and arrives at a sink after processing such as source encoding, channel encoding, modulation, air interface transmission, demodulation, channel decoding, and source recovery, to complete information transmission from the source to the sink. In FIG. 2, processing (including source encoding, channel encoding, modulation, and the like) shown at an upper layer is performed at a sending device, and processing (including demodulation, channel decoding, source recovery, and the like) shown at a lower layer is performed at a receiving device. Embodiments of the present disclosure mainly relate to an encoding or decoding process shown in FIG. 2, for example, source encoding, channel encoding, channel decoding, or source recovery.

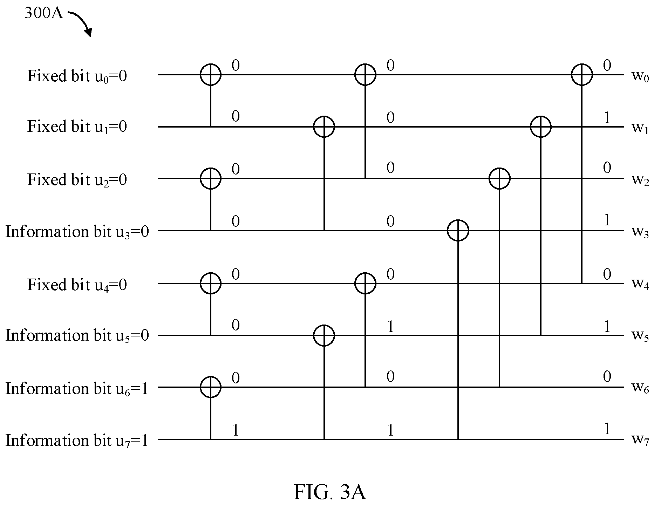

Polar coding (or referred to as polar codes) is a first channel coding scheme that can be rigorously proven to achieve the Shannon channel capacity, offering excellent performance, low complexity, and other features. Currently, the polar codes have been adopted by the 3rd generation partnership project (3rd Generation Partnership Project, 3GPP) as a control channel coding scheme in 5G enhanced mobile broadband scenarios (Enhanced Mobile Broadband, eMBB). FIG. 3A is a diagram 300A of an example polar code in which embodiments of the present disclosure may be implemented. FIG. 3A shows an example of 8×8 polar code encoding with an input of 8 bits and an output of 8 bits, where ⊕ represents a bitwise XOR operation. In FIG. 3A, to-be-encoded bits on a left side are classified into frozen bits (frozen bit) and information bits (data bit) based on reliability order of corresponding bit subchannels. A bit position with low reliability is set as a frozen bit, for example, may be set to 0, and is known to both an encoding apparatus and a decoding apparatus in an actual transmission. A bit position with high reliability is set as an information bit, and is used to carry to-be-transmitted information. As shown in FIG. 3A, u₇, u₆, u₅, and u₃ are four bit positions with higher reliability, and are set as information bits, and u₄, u₂, u₁, and u₀ are four bit positions with lower reliability, and are set as frozen bits.

Currently, a polar code decoding method is mainly a successive cancellation decoding algorithm. The successive cancellation decoding algorithm means that a decoder performs decoding bit by bit based on a natural time sequence of a polar code design. A typical successive cancellation decoding algorithm includes successive cancellation (successive cancellation, SC) decoding, successive cancellation list (successive cancellation list, SCL) decoding, cyclic redundancy check-aided successive cancellation list (cyclic redundancy check-aided successive cancellation list, CA-SCL) decoding, and the like. SC decoding has worst decoding performance. SCL decoding has much better decoding performance than SC decoding. CA-SCL obtained by adding a cyclic redundancy check may make performance of the polar code better than performance of a low-density parity-check (low-density parity-check, LDPC) code and a turbo code (Turbo code). Therefore, currently, SCL decoding and CA-SCL decoding are mainly used in a system.

It can be learned from FIG. 3A that a mother code length obtained based on the polar code is an integer power of 2. When an encoding length N required for actual communication is not the mother code length, a manner such as puncturing, shortening, or repetition needs to be further used, so that the mother code length can match the encoding length N. Puncturing is removing bits at several positions in a sequence with the mother code length, shortening is truncating the sequence with the mother code length, and repetition is repeating bits at several positions in the sequence with the mother code length.

A HARQ transmission is a technology formed by combining an FEC code and an ARQ, and may significantly improve spectral efficiency. In the HARQ transmission, if decoding fails, a receiver stores received data, and requests a transmitter to retransmit data. The receiver combines the retransmitted data and previously received data and then performs decoding. In this way, a diversity gain can be generated, a retransmission quantity is reduced, and a delay is reduced. The HARQ transmission may include a chase combine (chase combine, CC) retransmission and an incremental redundancy (incremental redundancy, IR) retransmission. The CC retransmission means that the transmitter repeatedly sends a part or all of a codeword for an initial transmission, and the receiver combines received data that is sent for a plurality of times at a consistent position on the codeword and then performs decoding. Sending for plurality of times is equivalent to increasing sending energy of a codeword bit. The IR retransmission is a process in which the transmitter incrementally sends a codeword bit that is not sent in the initial transmission. Therefore, total sending energy is increased, and a long code gain can be obtained.

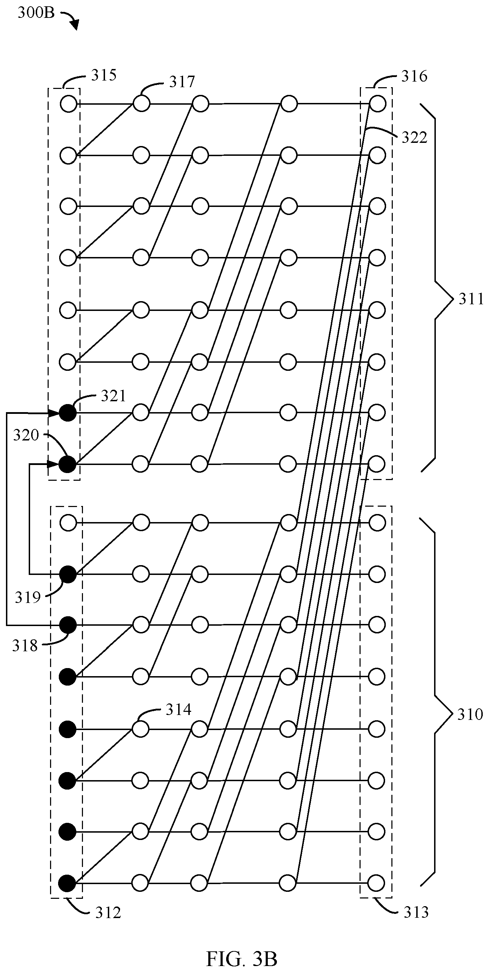

FIG. 3B is a diagram 300B of an example IR-HARQ transmission of a polar code in which embodiments of the present disclosure may be implemented. As shown in FIG. 3B, reference numeral 310 denotes an initial transmission polar code (also referred to as a U code in this specification) with a length of 8. Reference numeral 311 denotes a retransmission polar code (also referred to as a V code in this specification) with a length of 8. For example, an initial transmission input data bit sequence 312 is encoded by using the initial transmission polar code, to obtain an initial transmission encoded bit sequence 313. In the initial transmission input data bit sequence 312, a solid point represents an information bit, and a hollow point represents a frozen bit. In the initial transmission polar code 310, in each middle column other than the initial transmission input bit sequence and the initial transmission encoded bit sequence, a point (for example, 314) with two inputs represents a bitwise XOR operation. A data retransmission input bit sequence 315 is encoded by using the retransmission polar code, to obtain a retransmission encoded bit sequence 316. In the data retransmission input bit sequence 315, a solid point represents an information bit, and a hollow point represents a frozen bit. In addition, in the data retransmission input bit sequence 315, information bits 321 are obtained by copying information bits 318 of the initial transmission polar code. An information bit 320 is obtained by copying an information bit 319 of the initial transmission polar code. In the retransmission polar code 311, in each middle column other than the retransmission input bit sequence and the retransmission encoded bit sequence, a point (for example, 317) with two inputs represents a bitwise XOR operation. There is a connection line (for example, 322) between the retransmission polar code 311 and the initial transmission polar code 310, and information about the initial transmission polar code 310 is completely introduced into the retransmission polar code 311.

During decoding, if the initial transmission polar code 310 is separately decoded, 318 and 319 are information bits. If the initial transmission polar code 310 and the retransmission polar code 311 are jointly decoded, the initial transmission polar code 310 and the retransmission polar code 311 may be jointly forms a polar code with a length of 16. 320 and 321 are information bits. When 318 and 319 are obtained through decoding, results of 318 and 319 have been obtained based on 320 and 321 the same as 318 and 319. Therefore, 318 and 319 become known values, and may be understood as dynamic frozen bits. Based on such a framework, regardless of whether the initial transmission polar code 310 is separately decoded or the initial transmission polar code 310 and the retransmission polar code 311 are jointly decoded, an information bit is always carried at a high-reliability position, to ensure optimal decoding performance. It is understood from the perspective of code rate allocation that, based on the foregoing one-to-one mapping relationship, it is equivalent to that an information bit of the initial transmission polar code 310 is "moved" to the retransmission polar code 311, to implement optimal code rate allocation of the initial transmission polar code 310 and the retransmission polar code 311. It should be understood that the example shown in FIG. 3B is merely for the illustration purpose, and is not intended to limit the content of the present disclosure.

5G rate matching is used for an initial transmission. A mother code length of the polar code is divided into 32 sub-blocks, and sub-block interleaving is performed. It is assumed that NRV0 is an encoding length of an initial transmission mother code, and ERV0 is a transmission length. If NRV0>ERV0, rate matching needs to be performed. In a rate matching process, for a high code rate, a shortening operation is performed on a last mother code with a length of NRV0-ERV0. For a low code rate, a puncturing operation is performed on a first mother code with a length of NRV0-ERV0, to pre-freeze a non-interleaved position corresponding to a puncturing position. In a puncturing pattern, some bit positions are additionally pre-frozen based on NRV0 and ERV0, to ensure that some positions whose capacities greatly change due to puncturing are not selected as information bits. Based on the information bit and/or the pre-frozen position, the codeword, namely, the U code, for the initial transmission may be constructed based on the mother code through the puncturing or shortening operation.

In a conventional solution for a retransmission, for a high-code-rate initial transmission, a codeword, namely, the V code, for the retransmission is constructed based on the mother code. Then, an end position for the initial transmission is used as a start position for the retransmission, and the retransmission is cyclically performed between the V code and the U code based on the transmission length. For a low-code-rate initial transmission, the V code is not constructed. Instead, an end position for the initial transmission is used as a start position for the retransmission, and the retransmission is cyclically performed only between U codes based on the transmission length. Because the retransmission of the polar code is affected by rate matching of the initial transmission, a rate matching scheme for the retransmission is very complex, and retransmission performance is unstable.

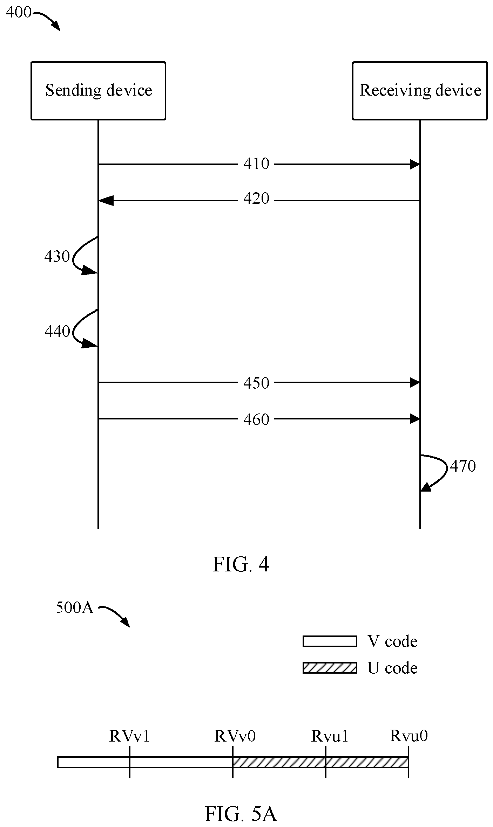

In view of this, an embodiment of the present disclosure proposes a communication solution, to resolve the foregoing and other potential problems. In this solution, a plurality of start positions for a retransmission are defined. Only selection of a specific start position can trigger construction or use of a V code. In other words, a cyclic range for the retransmission may vary with selection of the start position. In this manner, rate matching of the retransmission can be simplified, making retransmission performance stable. The following describes this in detail with reference to FIG. 4 to FIG. 6G. FIG. 4 is a diagram of a communication process 400 according to an embodiment of the present disclosure. It may be understood that the communication process shown in FIG. 4 is only an example rather than a limitation. This embodiment of the present disclosure may include steps that are not shown in FIG. 4, or some steps shown in FIG. 4 are omitted. In addition, a sequence of the steps in FIG. 4 is merely used for illustration rather than limitation. The communication process 400 may be performed between a sending device and a receiving device in a communication system 100. "Sending device" or "receiving device" may be the sending device or the receiving device, or may be an apparatus that can support the sending device or the receiving device in implementing functions. For convenience, the sending device and the receiving device are uniformly used for description in the following descriptions.

As shown in FIG. 4, in step 410, the sending device may perform an initial transmission of an information bit sequence based on a U code (also referred to as a first polar code in this specification) of the information bit sequence. In some embodiments, the information bit sequence may be a to-be-encoded information bit sequence, namely, a payload bit (payload bits). In some embodiments, the information bit sequence may be an information bit sequence obtained through concatenated encoding. For example, the information bit sequence may include a cyclic redundancy check (cyclic redundancy check, CRC) bit. It should be understood that the U code may be constructed in any existing proper manner or any future developed proper manner. This is not limited in this embodiment of the present disclosure. Correspondingly, the receiving device may receive the initial transmission of the information bit sequence and perform decoding.

As shown in FIG. 4, in step 420, when decoding of the information bit sequence fails, the receiving device may send an indication to the sending device, to indicate that decoding fails. Based on the indication, the sending device may trigger retransmission of the information bit sequence.

As shown in FIG. 4, in step 430, the sending device may determine a start position for the retransmission from a plurality of start positions. In some embodiments, the plurality of start positions may include a start position associated with the U code, namely, a position corresponding to one or more bits of the U code. In some embodiments, the plurality of start positions may include a start position associated with the V code (also referred to as a second polar code in this specification), namely, a position corresponding to one or more bits of the V code. In some embodiments, the plurality of start positions may include both a start position associated with the U code and a start position associated with the V code. In some embodiments, the plurality of start positions can be used only when being activated. In some embodiments, a start position is activated only when a polar code associated with the start position is constructed or used. For example, when the V code is not constructed or used, a selection range of the start position may include a start position associated with the U code and a specific start position that is associated with the V code and that is used to trigger construction or use of the V code. In another example, when at least a part of the V code is constructed or used, a selection range of the start position may include a start position associated with the U code, a start position associated with the constructed or used V code, and a specific start position for triggering construction or use of the other part of the V code. In another example, when the V code is constructed or used, a selection range of the start position may include a start position associated with the U code and a start position associated with the V code. For ease of understanding, the following provides further descriptions with reference to FIG. 5A.

FIG. 5A is a diagram 500A of a time domain of an example start position according to an embodiment of the present disclosure. As shown in FIG. 5A, start positions RVu0 and RVu1 associated with the U code and start positions RVv0 and RVv1 associated with the V code may be defined. RVv0 is a specific start position used to trigger construction or use of the V code. It should be understood that a quantity of start positions is merely an example, and more or fewer start positions are also feasible.

The U code is constructed during the initial transmission. It is assumed that a transmission length of the initial transmission is E0. The length E0 is selected starting from the start position RVu0 in an encoded sequence (for example, an encoded sequence obtained through sub-block interleaving), so that a transmission sequence for the initial transmission can be determined. After the U code is constructed in the initial transmission, the start positions RVu0, RVu1, and RVv0 are activated. In other words, the start position for the retransmission may be selected from the start positions RVu0, RVu1, and RVv0 during the retransmission. If RVv0 is not selected as the start position for the retransmission, RVv1 is not activated, and a selection range of a start position for a subsequent retransmission is still RVu0, RVu1, and RVv0. If RVv0 is selected as the start position for the retransmission, RVv1 is activated, and a selection range of a start position for a subsequent retransmission may be RVu0, RVu1, RVv0, and RVv1.

In some embodiments, a start position for each retransmission in a group of retransmissions of the information bit sequence may be configured by a network. For example, when the sending device is a terminal device, the terminal device may receive information about the start position for the retransmission from a network device. In this manner, the network device may flexibly configure the start position for the retransmission based on a requirement. In other words, the start position for the retransmission may depend on network implementation.

In some embodiments, the start position for each retransmission in the group of retransmissions may alternatively be selected by the sending device from the plurality of start positions based on at least one of a code rate or a puncturing ratio of the information bit sequence. In this manner, the sending device may flexibly select the start position for the retransmission. In some embodiments, a puncturing pattern is used in rate matching of a low-code rate initial transmission. When a large amount of puncturing is performed in the initial transmission, the start position associated with the U code may be selected. When a small amount of puncturing is performed in the initial transmission, the specific start position associated with the V code may be selected to trigger construction or use of the V code. In some embodiments, a shortening pattern is used in rate matching of a high-code rate initial transmission. In this case, the specific start position associated with the V code may be selected to trigger the construction or use of the V code, without considering a quantity of bits for shortening in the initial transmission. It should be understood that selection of the start position may be implemented in any proper manner, and is not limited to the foregoing examples.

Still as shown in FIG. 4, after the start position for the retransmission is determined, in step 440, the sending device may determine whether the start position for the retransmission is the start position associated with the U code or the start position associated with the V code. In some embodiments, when the V code is not constructed or used, the sending device may determine whether the start position is a specific start position (also referred to as a first start position in this specification for convenience) that is associated with the V code and that is used to trigger construction or use of the V code.

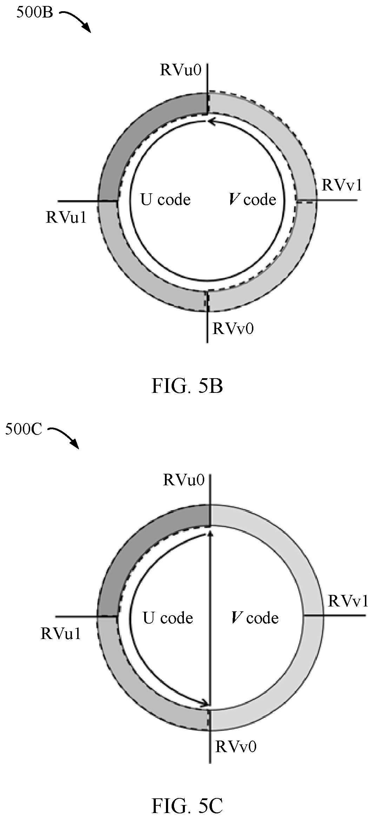

As shown in FIG. 4, in step 450, if the start position for the retransmission is the first start position, the sending device may generate (namely, construct) or activate the V code. It should be understood that the V code may be constructed in any existing proper manner or any future developed proper manner. This is not limited in this embodiment of the present disclosure. Then, the sending device may perform the retransmission based on at least a part of a constructed polar code (namely, both the V code and the U code). In some embodiments, the sending device may determine a transmission sequence for the retransmission by cycling between the V code and the U code based on the first start position and the transmission length. In other words, the cyclic range includes both the V code and the U code. In some embodiments, after the V code is generated, for a subsequent retransmission, the sending device may perform the subsequent retransmission based on at least one of the V code and the U code, regardless of a start position for the subsequent retransmission. For ease of understanding, the following provides further descriptions with reference to FIG. 5B.

FIG. 5B is a diagram 500B of an example cyclic range according to an embodiment of the present disclosure. As shown in FIG. 5B, RVv0 is selected as the start position for the retransmission. Therefore, the V code can be constructed, and the retransmission is performed cyclically between the U code and the V code. RVv1 is activated because the V code is constructed or used. Therefore, during the subsequent retransmission, the start position for the subsequent retransmission may be selected from the start positions RVu0, RVu1, RVv0, and RVv1, and the subsequent retransmission is performed cyclically between the U code and the V code.

Back to FIG. 4, in step 460, if the start position for the retransmission is not the first start position, but the start position associated with the U code, the sending device may perform the retransmission based on the constructed polar code (namely, only the U code). In some embodiments, the sending device may determine a transmission sequence for the retransmission through a cycle within the U code based on the first start position and the transmission length. In other words, the cyclic range includes only the U code. For ease of understanding, the following provides further descriptions with reference to FIG. 5C.

FIG. 5C is a diagram 500C of another example cyclic range according to an embodiment of the present disclosure. As shown in FIG. 5C, RVv0 is not selected as the start position for the retransmission, but RVu0 or RVu1 is selected as the start position for the retransmission. In this case, the V code does not need to be constructed or used, and the retransmission is performed only within the U code (namely, RVu0 and RVv0 coincide). RVv1 is not activated because the V code is not constructed or used. Therefore, the start position for the subsequent retransmission is still selected from RVu0, RVu1, and RVv0.

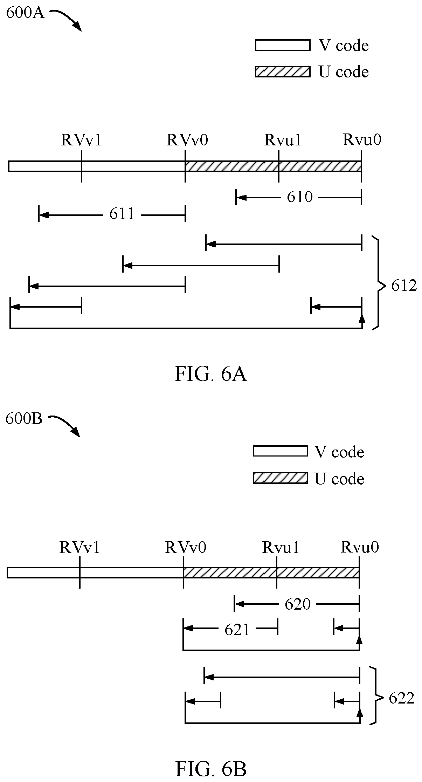

For ease of understanding, the following describes several examples of the retransmission with reference to FIG. 6A to FIG. 6C. FIG. 6A is a diagram 600A of a time domain of an example retransmission according to an embodiment of the present disclosure. As shown in FIG. 6A, the start positions RVu0 and RVu1 associated with the U code and the start positions RVv0 and RVv1 associated with the V code are defined. It should be understood that the quantity of start positions is merely an example, and more or fewer start positions are also feasible. It is assumed that the transmission length of the initial transmission is E0. As shown in FIG. 6A, the length E0 is selected starting from the start position RVu0 in an encoded sequence of the U code, to determine a transmission sequence 610 for the initial transmission. In this example, a start position for a 1^{st} retransmission after the initial transmission is selected as RVv0. It is assumed that a transmission length of the 1^{st} retransmission is E1. An information bit distribution of the V code may be constructed based on E1, an information bit distribution of the U code, and a reliability sequence, and then an encoded sequence of the V code is obtained. As shown in FIG. 6A, the length E1 is selected starting from the start position RVv0 in the encoded sequence of the V code, to determine a transmission sequence 611 for the 1^{st} retransmission. It should be understood that, if E1 exceeds a non-shortened length of the V code, the U code returns for sending, which can be learned from FIG. 5B. Still as shown in FIG. 6A, for a subsequent retransmission 612 (for example, a 2^{nd} retransmission, or a 3^{rd} retransmission), any position in RVu0, RVu1, RVv0, and RVv1 may be selected as a start position for the subsequent retransmission, and a length (namely, the cyclic range) of a circular buffer may be a sum of the V code and the U code.

In the example in FIG. 6A, the specific start position associated with the V code is directly selected during the retransmission, to activate the V code, so that a long code gain can be obtained.

FIG. 6B is a diagram 600B of a time domain of another example retransmission according to an embodiment of the present disclosure. As shown in FIG. 6B, the start positions RVu0 and RVu1 associated with the U code and the start positions RVv0 and RVv1 associated with the V code are defined. It should be understood that the quantity of start positions is merely an example, and more or fewer start positions are also feasible. It is assumed that the transmission length of the initial transmission is E0. As shown in FIG. 6B, the length E0 is selected starting from the start position RVu0 in an encoded sequence of the U code, to determine a transmission sequence 620 for the initial transmission. In this example, a start position for a 1^{st} retransmission after the initial transmission is selected as RVu1. In this case, the V code does not need to be constructed or used, and a cycle is only within the U code. It is assumed that a transmission length of the 1^{st} retransmission is E1. As shown in FIG. 6B, the length E1 is selected starting from the start position RVu1 in the encoded sequence of the U code, to determine a transmission sequence 621 for the 1^{st} retransmission. It can be learned from FIG. 5A that, the length E1 is selected starting from RVu1, and if the length E1 exceeds RVv0, RVu0 returns, and a cycle continues in the U code. Still as shown in FIG. 6B, in this example, for a subsequent retransmission 622 (for example, a 2^{nd} retransmission, or a 3^{rd} retransmission), either position in RVu0 and RVu1 may be selected as a start position for the subsequent retransmission, and the cyclic range is the U code.

In the example in FIG. 6B, only the start position associated with the U code is selected as the start position for the retransmission, the retransmission may be performed only within the U code. This is especially applicable to, for example, a scenario in which interference is large, or a scenario in which UE does not support a HARQ transmission. In other words, a retransmission mechanism may be flexibly adjusted according to a UE capability requirement. This avoids an excessive small newly added encoding gain and unstable performance that are caused by insufficient resources and an excessive small construction length when the V code is constructed. The cycle is only in the U code, so that transmission performance is stable and implementation complexity is low.

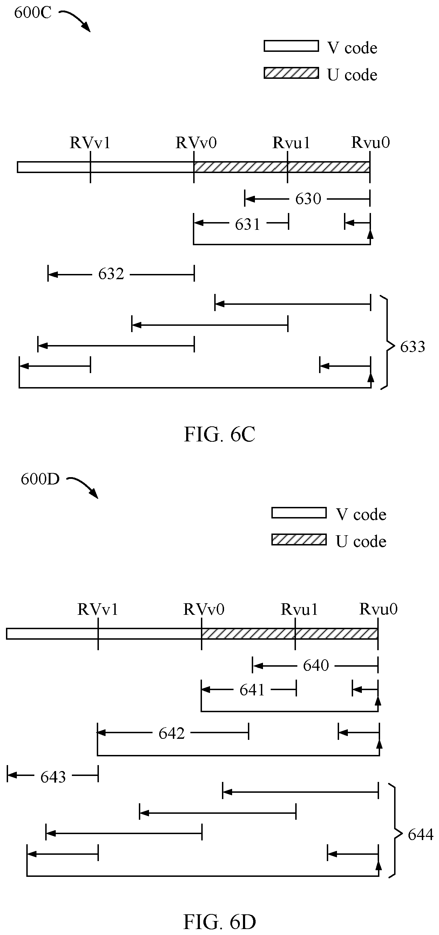

FIG. 6C is a diagram 600C of a time domain of another example retransmission according to an embodiment of the present disclosure. As shown in FIG. 6C, the start positions RVu0 and RVu1 associated with the U code and the start positions RVv0 and RVv1 associated with the V code are defined. It should be understood that the quantity of start positions is merely an example, and more or fewer start positions are also feasible. It is assumed that the transmission length of the initial transmission is E0. As shown in FIG. 6C, the length E0 is selected starting from the start position RVu0 in an encoded sequence of the U code, to determine a transmission sequence 630 for the initial transmission. In this example, start positions for first n (n≥1) retransmissions 631 after the initial transmission are all selected from RVu1 and RVu0, instead of RVv0. In this case, for the n retransmissions 631, the V code does not need to be constructed or used, and a cycle is only in the U code. In other words, a process of the n retransmissions is similar to the process described with reference to FIG. 6B.

Still as shown in FIG. 6C, during an (n+1)^{th} retransmission, RVv0 is selected as a start position for the retransmission, thereby activating construction or use of the V code. It is assumed that a transmission length of the (n+1)^{th} retransmission is Eₙ₊₁. The length Eₙ₊₁ is selected starting from the start position RVv0 in the encoded sequence of the V code, to determine a transmission sequence 632 for the (n+1)^{th} retransmission. Still as shown in FIG. 6C, for a subsequent retransmission 633 (for example, an (n+2)^{th} retransmission, or an (n+3)^{th} retransmission), any position in RVu0, RVu1, RVv0, and RVv1 may be selected as a start position for the subsequent retransmission, and the cyclic range may be a sum of the V code and the U code. In other words, a process of the (n+1)^{th} retransmission and a process of the subsequent retransmission are similar to the process described with reference to FIG. 6A.

In the example in FIG. 6C, the start position associated with the U code is selected as the start position for the retransmission, and then the start position associated with the V code is selected as the start position for the retransmission. In other words, the start position is selected, so that the retransmission is performed cyclically only in the U code and then performed cyclically between the V code and the U code. This is especially applicable to, for example, a scenario in which there is a small amount of information about the initial transmission, or a scenario in which interference is received. In other words, when a quantity of retransmissions is small, a cycle is in the U code, so that transmission performance is more stable. When a quantity of retransmissions is large, a cycle is in the U code and the V code, thereby obtaining a high encoding gain.

In the foregoing embodiments in FIG. 6A to FIG. 6C, when RVv0 is selected as the start position for the retransmission, all of the V code is generated or activated at one time. In some alternative embodiments, the V code may be generated or activated at a plurality of times. In other words, parts of the V code may be constructed separately. The following provides more detailed descriptions with reference to FIG. 6D to FIG. 6G.

FIG. 6D is a diagram 600D of a time domain of another example retransmission according to an embodiment of the present disclosure. As shown in FIG. 6D, the start positions RVu0 and RVu1 associated with the U code and the start positions RVv0 and RVv1 associated with the V code are defined. It is assumed that a part of the V code between RVv0 and RVv1 is a first part, and a remaining part is a second part. In this example, RVv0 is a specific start position for triggering construction or use of the first part of the V code, and RVv1 is a specific start position for triggering construction or use of the second part of the V code. It should be understood that this is merely an example, and the V code may be further divided into more parts.

It is assumed that the transmission length of the initial transmission is E0. As shown in FIG. 6D, during the initial transmission, the length E0 is selected starting from the start position RVu0 in an encoded sequence of the U code, to determine a transmission sequence 640 for the initial transmission. In this example, start positions for first n (n≥1) retransmissions 641 after the initial transmission are all selected from RVu1 and RVu0, instead of RVv0. In this case, for the n retransmissions 641, the V code does not need to be constructed or used, and a cycle is only in the U code. In other words, before RVv0 is used as the start position for the retransmission, RVu0, RVu1, and RVv0 may be used as the start position, and the cyclic range is limited to the U code, as shown in FIG. 5B.

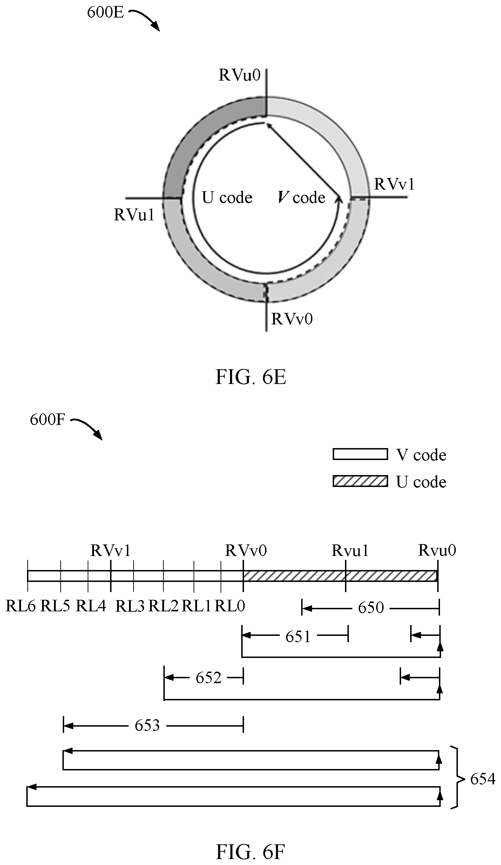

Still as shown in FIG. 6D, during an (n+1)^{th} retransmission, RVv0 is selected as a start position for the retransmission. It is assumed that a transmission length of the (n+1)^{th} retransmission is Eₙ₊₁, and the transmission length Eₙ₊₁ is less than the first part of the V code. In this case, construction or use of only the first part of the V code is activated. As shown in FIG. 6D, a transmission sequence 642 for the (n+1)^{th} retransmission is determined. Still as shown in FIG. 6D, for subsequent m retransmissions 643 (for example, from an (n+2)^{th} retransmission to an (n+m)^{th} retransmission, where m≥0), any position in RVu0, RVu1, RVv0, and RVv1 may be selected as a start position for the subsequent retransmission, and the cyclic range is only a sum of the first part of the V code and the U code. FIG. 6E is a diagram 600E of a cyclic range of the example retransmission in FIG. 6D. As shown in FIG. 6E, if Eₙ₊₁ is less than RVv0-RVv1, the cyclic range is a constructed part of the V code and the U code.

Still as shown in FIG. 6D, in an (n+m+1)^{th} retransmission, if the start position for the retransmission is selected as RVv1, construction or use of the second part of the V code is activated. It is assumed that a transmission length of the (n+m+1)^{th} retransmission is Eₙ₊ₘ₊₁. The length Eₙ₊ₘ₊₁ is selected starting from the start position RVv1 in the encoded sequence of the V code, to determine a transmission sequence 644 for the (n+m+1)^{th} retransmission. As shown in FIG. 6D, for a subsequent retransmission 645 (for example, an (n+m+2)^{th} retransmission, or an (n+m+3)^{th} retransmission), any position in RVu0, RVu1, RVv0, and RVv1 may be selected as a start position for the subsequent retransmission, and the cyclic range is a sum of the constructed or activated V code (for example, the first part and the second part) and the U code. For example, as shown in FIG. 6E, if RVv1 is used as the start position for the retransmission in subsequent sending, a remaining V code continues to be constructed, and the sum of the V code and the U code is used as the cyclic range.

In this example, if the transmission length Eₙ₊₁ of the (n+1)^{th} retransmission is greater than the first part of the V code, construction or use of the entire V code is activated. In addition, a start position for a subsequent retransmission may be selected from RVu0, RVu1, RVv0, and RVv1, and the cyclic range is the sum of the entire V code and the U code. It should be understood that the V code may be divided into more parts. For example, a start position RVv2 (not shown) is further defined after RVv1. If the transmission length Eₙ₊₁ of the (n+1)^{th} retransmission exceeds RVv1 and is shorter than RVv2, construction or use of a part of the V code until RVv2 is activated. In addition, a start position for a subsequent retransmission may be selected from RVu0, RVu1, RVv0, RVv1, and RVv2, and the cyclic range is a sum of the constructed part of the V code and the U code.

In the examples in FIG. 6D and FIG. 6E, the V code is allowed to be reconstructed for a plurality of times, and the long code gain can be obtained gradually. In this way, a system runs stably, and a long code gain loss caused by directly constructing an excessively long code in a case in which a quantity in a retransmission is small is avoided.

FIG. 6F is a diagram 600F of a time domain of another example retransmission according to an embodiment of the present disclosure. In this example, a case of a rateless polar code is considered, and two groups of start positions are defined. As shown in FIG. 6F, a first group of start positions include the start positions RVu0 and RVu1 associated with the U code and the start positions RVv0 and RVv1 associated with the V code. A second group of start positions includes one or more start positions between two start positions in the first group of start positions, for example, RL0, RL1, RL2, RL3 between RVv0 and RVv1 and RL4, RL5, RL6 between RVv1 and an end of the V code. In this example, RL6 coincides with the end of the V code. It should be understood that FIG. 6F is merely an example, and the second group of start positions (for example, RL4, RL5, and RL6 may alternatively not exist) may not be included between two start positions in the first group of start positions.

It is assumed that the transmission length of the initial transmission is E0, and a length of the information bit sequence is K. During the initial transmission, the U code and the V code are constructed based on E0 and K. It should be understood that the U code and the V code may be constructed in any proper manner herein. This is not limited in this embodiment of the present disclosure. As shown in FIG. 6F, during the initial transmission, the length E0 is selected starting from the start position RVu0 in an encoded sequence of the U code, to determine a transmission sequence 650 for the initial transmission. In this example, start positions for first n (n≥1) retransmissions 651 after the initial transmission are all selected from RVu1 and RVu0, instead of RVv0. In this case, for the n retransmissions 651, the V code does not need to be constructed or used, and a cycle is only in the U code. In other words, before RVv0 is used as the start position for the retransmission, RVu0, RVu1, and RVv0 may be used as the start position, and the cyclic range is limited to the U code, as shown in FIG. 5B.

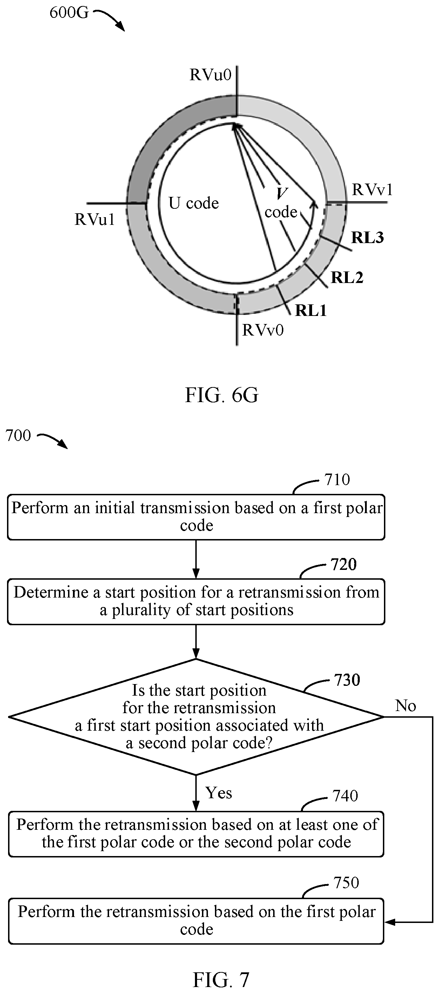

Still as shown in FIG. 6F, during an (n+1)^{th} retransmission 652, RVv0 is selected as a start position for the retransmission. It is assumed that a transmission length of the (n+1)^{th} retransmission is Eₙ₊₁, and the transmission length Eₙ₊₁ is less than a first part of the V code between RVv0 and RVv1. In this case, construction or use of only the first part of the V code is activated. When the transmission sequence is determined, if the transmission length Eₙ₊₁ exceeds one position (for example, RL1) in the second group of start positions between RVv0 and RVv1, but does not exceed a next position (for example. RL2), the U code returns at RL1 to continue a cycle. FIG. 6G is a diagram 600G of an example cyclic range of the retransmissions in FIG. 6F. As shown in FIG. 6G, if Eₙ₊₁ exceeds RL1 but cannot reach RL2, the U code returns at RL1 to continue a cycle, as shown in a reference numeral 660.

When RVv0 is activated, start positions RL0, RL1, RL2, and RL3 between RVv0 and RVv1 are also activated. In other words, for subsequent m retransmissions (for example, from an (n+2)^{th} retransmission to an (n+m)^{th} retransmission, where m≥0), any position in RVu0, RVu1, RVv0, RVv1, RL0, RL1, RL2, and RL3 may be selected as a start position for the subsequent retransmission. If the transmission length reaches RLa but does not reach RLa+1, the U code returns at RLa to continue a cycle.

Still as shown in FIG. 6F, in the (n+m+1)^{th} retransmission 653, if the transmission length Eₙ₊ₘ₊₁ exceeds RVv1, RVv1, RL4, RL5, and RL6 are all activated. If the transmission length Eₙ₊ₘ₊₁ reaches RLa (for example, RL5) but cannot reach RLa+1 (for example, RL6), the U code returns at RLa (for example, RL5) to continue a cycle, as shown in FIG. 6G. When RVv1 is activated, start positions RL4, RL5, and RL6 between RVv1 and the end of the V code are also activated. In other words, for a subsequent retransmission 654, any position in RVu0, RVu1, RVv0, RVv1, RL0, RL1, RL2, RL3, RL4, RL5, and RL6 may be selected as a start position for the subsequent retransmission. If a transmission length reaches RLa but does not reach RLa+1, the U code returns at RLa to continue a cycle. If the transmission length reaches RL6 (namely, the end of the V code), the retransmission is performed cyclically between the entire V code and the U code.

In the examples in FIG. 6F and FIG. 6G, a flexible scheduling requirement of the rateless polar code may be compatible.

Back to FIG. 4, in step 470, the receiving device may correspondingly receive the initial transmission and the retransmission of the information bit sequence, to obtain the information bit sequence through decoding. The operation in step 470 is similar to operations described with reference to steps 410 to 460. Details are not described herein again.

So far, the communication process according to this embodiment of this application is described. Based on the communication process, the plurality of start positions for the retransmission are defined, and the corresponding cyclic range for the retransmission is determined based on the start positions, thereby simplifying a rate matching process for the retransmission, making retransmission performance stable. In addition, the long code gain can be ensured, thereby implementing a reliable transmission.

Corresponding to the foregoing communication process, an embodiment of the present disclosure further provides a communication method that may be implemented at a communication device (namely, a sending device and/or a receiving device). FIG. 7 is a schematic flowchart of a communication method 700 according to an embodiment of the present disclosure. For example, the method 700 may be implemented at the sending device, for example, at the terminal 120, the RAN node 110, the core network device, or the server shown in FIG. 1. It should be understood that the method 700 may include other additional steps that are not shown, or some of the shown steps may be omitted. The scope of the present disclosure is not limited thereto.

In step 710, the sending device performs an initial transmission of an information bit sequence based on a first polar code (for example, a U code) of the information bit sequence.

In step 720, the sending device determines a start position for a first retransmission of the information bit sequence from a plurality of start positions for the first retransmission. In some embodiments, the plurality of start positions may include at least one of at least one start position associated with the first polar code or at least one start position associated with a second polar code. In some embodiments, a start position for each retransmission in a group of retransmissions of the information bit sequence may be configured by a network. In some embodiments, a start position for each retransmission in a group of retransmissions may be selected from the plurality of start positions based on at least one of a code rate or a puncturing ratio of the information bit sequence.

In step 730, the sending device determines whether the start position for the first retransmission is a first start position (for example, RVv0) associated with the second polar code (for example, the V code) of the information bit sequence. If the start position for the first retransmission is the first start position, step 740 is performed.

In step 740, the sending device generates the second polar code, and performs the first retransmission of the information bit sequence based on at least one of the second polar code or the first polar code. In some embodiments, the sending device may determine a transmission sequence for the first retransmission based on the first start position and a transmission length by cycling between the second polar code and the first polar code.

If it is determined in step 730 that the start position for the first retransmission is not the first start position, but the start position associated with the first polar code, step 750 is performed. In step 750, the sending device performs the first retransmission of the information bit sequence based on the first polar code. In some embodiments, the sending device may determine the transmission sequence for the first retransmission based on the start position and a transmission length of the first retransmission by cycling over the first polar code.

In some embodiments, after the second polar code is generated, the sending device may perform a second retransmission of the information bit sequence based on at least one of the second polar code or the first polar code for the second retransmission of the information bit sequence. Therefore, a cyclic range for retransmission can be determined in a constructed polar code.

In some embodiments, a transmission length of the first retransmission may be less than a distance between the first start position and a second start position, and the second start position is associated with the second polar code. In these embodiments, the sending device may generate a first part of the second polar code. The first part is between the first start position and the second start position. The sending device may determine the transmission sequence for the first retransmission based on the first start position and the transmission length by cycling between the first part of the second polar code and the first polar code. Therefore, a polar code can be allowed to be reconstructed for a plurality of times, to gradually obtain a long code gain, so that a system runs stably. In addition, a long code gain loss caused by directly constructing an excessively long code in a case in which a quantity of information bits of retransmission is small may be avoided.

In some embodiments, after the first retransmission, if the sending device determines to perform a third retransmission of the information bit sequence, a start position for the third retransmission is the second start position, a transmission length of the third retransmission is less than a distance between the second start position and a third start position, and the third start position is associated with the second polar code, a second part of the second polar code is generated. The second part is between the second start position and the third start position. The sending device may determine a transmission sequence for the third retransmission based on the second start position and the transmission length of the third retransmission by cycling between the second part of the second polar code, the first polar code, and the first part of the second polar code. Therefore, a polar code can be gradually constructed, to gradually obtain a long code gain, so that a system runs stably. In addition, a long code gain loss caused by directly constructing an excessively long code in a case in which a quantity of information bits of retransmission is small may be avoided.

In some embodiments, a transmission length of the first retransmission may be less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. The sending device may determine a transmission sequence for the first retransmission based on the first start position and the transmission length by cycling between a first subpart of a first part of the second polar code and the first polar code. The first subpart is between the first start position and a last start position that is reachable by the transmission length in the second group of start positions. Therefore, while being compatible with a flexible scheduling requirement of a rateless code, a polar code can be reconstructed for a plurality of times, to gradually obtain a long code gain.

In some embodiments, a transmission length of the first retransmission may be greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. The sending device may determine a transmission sequence for the first retransmission based on the first start position and a transmission length by cycling between the second polar code and the first polar code. Therefore, while being compatible with a flexible scheduling requirement of a rateless code, a polar code can be gradually constructed, and a long code gain can be gradually obtained.

According to the method 700, a start position for a retransmission can be selected, and different cyclic ranges for the retransmission are determined based on different start positions. Therefore, a rate matching process for the retransmission can be simplified, so that retransmission sending performance is stable.

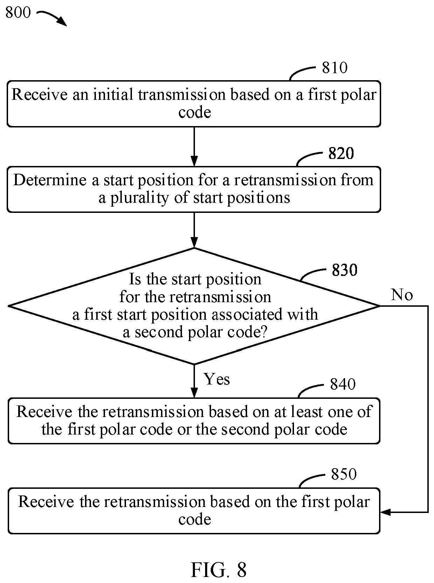

FIG. 8 is a schematic flowchart of another communication method 800 according to an embodiment of the present disclosure. For example, the method 800 may be implemented at the receiving device, for example, at the terminal 120, the RAN node 110, the core network device, or the server shown in FIG. 1. It should be understood that the method 800 may include other additional steps that are not shown, or some of the shown steps may be omitted. The scope of the present disclosure is not limited thereto.

In step 810, the receiving device receives an initial transmission of an information bit sequence based on a first polar code (for example, a U code) of the information bit sequence.

In step 820, the receiving device determines a start position for a first retransmission of the information bit sequence from a plurality of start positions for the first retransmission. In some embodiments, the plurality of start positions may include at least one of at least one start position associated with the first polar code or at least one start position associated with the second polar code. In some embodiments, a start position for each retransmission in a group of retransmissions of the information bit sequence may be configured by a network. In some embodiments, a start position for each retransmission in the group of retransmissions may be selected from the plurality of start positions based on at least one of a code rate or a puncturing ratio of the information bit sequence.

In step 830, the receiving device determines whether the start position for the first retransmission is a first start position (for example, RVv0) associated with the second polar code (for example, the V code) of the information bit sequence. If the start position for the first retransmission is the first start position, step 840 is performed.

In step 840, the receiving device generates the second polar code, and receives the first retransmission of the information bit sequence based on at least one of the second polar code or the first polar code. In some embodiments, the sending device may determine a transmission sequence for the first retransmission based on the first start position and a transmission length by cycling between the second polar code and the first polar code.

If it is determined in step 830 that the start position for the first retransmission is not the first start position, but the start position associated with the first polar code, step 850 is performed. In step 850, the receiving device performs the first retransmission of the information bit sequence based on the first polar code. In some embodiments, the receiving device may determine the transmission sequence for the first retransmission based on the start position and a transmission length of the first retransmission by cycling over the first polar code.

In some embodiments, after the second polar code is generated, the receiving device may receive a second retransmission of the information bit sequence based on at least one of the second polar code or the first polar code for the second retransmission of the information bit sequence. Therefore, a cyclic range for a retransmission can be determined in a constructed polar code.

In some embodiments, a transmission length of the first retransmission may be less than a distance between the first start position and a second start position, and the second start position is associated with the second polar code. In these embodiments, the receiving device may generate a first part of the second polar code. The first part is between the first start position and the second start position. The receiving device may determine the transmission sequence for the first retransmission based on the first start position and the transmission length by cycling between the first part of the second polar code and the first polar code. Therefore, a polar code can be allowed to be reconstructed for a plurality of times, to gradually obtain a long code gain, so that a system runs stably. In addition, a long code gain loss caused by directly constructing an excessively long code in a case in which a quantity of information bits of retransmission is small may be avoided.

In some embodiments, after the first retransmission, if the receiving device determines to receive a third retransmission of the information bit sequence, a start position for the third retransmission is the second start position, a transmission length of the third retransmission is less than a distance between the second start position and a third start position, and the third start position is associated with the second polar code, a second part of the second polar code is generated. The second part is between the second start position and the third start position. The receiving device may determine a transmission sequence for the third retransmission based on the second start position and the transmission length of the third retransmission by cycling between the second part of the second polar code, the first polar code, and the first part of the second polar code. Therefore, a polar code can be gradually constructed, to gradually obtain a long code gain, so that a system runs stably. In addition, a long code gain loss caused by directly constructing an excessively long code in a case in which a quantity of information bits of retransmission is small may be avoided.

In some embodiments, a transmission length of the first retransmission may be less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. The receiving device may determine a transmission sequence for the first retransmission based on the first start position and the transmission length by cycling between a first subpart of a first part of the second polar code and the first polar code. The first subpart is between the first start position and a last start position that is reachable by the transmission length in the second group of start positions. Therefore, while being compatible with a flexible scheduling requirement of a rateless code, a polar code can be reconstructed for a plurality of times, to gradually obtain a long code gain.

In some embodiments, a transmission length of the first retransmission may be greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. The receiving device may determine a transmission sequence for the first retransmission based on the first start position and a transmission length by cycling between the second polar code and the first polar code. Therefore, while being compatible with a flexible scheduling requirement of a rateless code, a polar code can be gradually constructed, and a long code gain can be gradually obtained.

According to the method 800, a start position for a retransmission can be selected, and different cyclic ranges for the retransmission are determined based on different start positions. Therefore, a rate matching process for the retransmission can be simplified, so that retransmission receiving performance is stable.

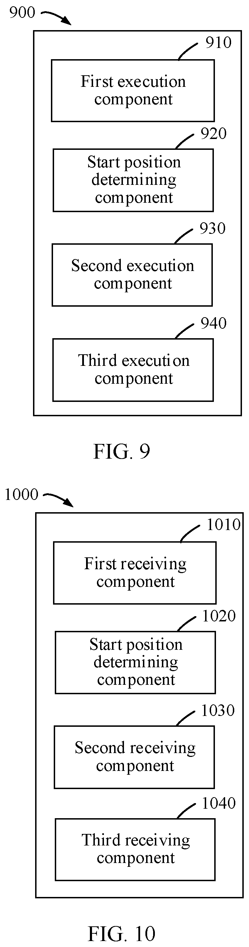

Corresponding to the foregoing communication method, embodiments of the present disclosure further provide a communication apparatus and a communication device. The following describes this with reference to FIG. 9 to FIG. 11. FIG. 9 is a block diagram of a communication apparatus 900 according to an embodiment of the present disclosure. The communication apparatus 900 may be implemented at a sending device. The communication apparatus 900 may be a part of the sending device, or may be the sending device. It should be understood that the communication apparatus 900 may include more additional components than the shown components, or some of the shown components are omitted. This is not limited in this embodiment of the present disclosure.

As shown in FIG. 9, the communication apparatus 900 may include a first execution component 910, a start position determining component 920, a second execution component 930, and a third execution component 940. The first execution component 910 may be configured to perform an initial transmission of an information bit sequence based on a first polar code of the information bit sequence. The start position determining component 920 may be configured to determine a start position for a first retransmission of the information bit sequence from a plurality of start positions for the first retransmission. The second execution component 930 may be configured to: if the start position for the first retransmission is a first start position associated with a second polar code of the information bit sequence, generate the second polar code, and perform the first retransmission of the information bit sequence based on at least one of the second polar code or the first polar code. The third execution component 940 may be configured to perform the first retransmission of the information bit sequence based on the first polar code if the start position for the first retransmission is a start position associated with the first polar code.

In some embodiments, the apparatus 900 may further include (not shown): a fourth execution component, configured to: after the second polar code is generated, perform a second retransmission of the information bit sequence based on at least one of the second polar code or the first polar code for the second retransmission of the information bit sequence.

In some embodiments, a transmission length of the first retransmission may be less than a distance between the first start position and a second start position, and the second start position is associated with the second polar code. In these embodiments, the second execution component 930 may include: a generation component, configured to generate a first part of the second polar code, where the first part is between the first start position and the second start position; and a first sequence determining component, configured to determine a transmission sequence for the first retransmission based on the first start position and the transmission length by cycling between the first part of the second polar code and the first polar code.

In some embodiments, the apparatus 900 may further include (not shown): a fifth execution component, configured to: after the first retransmission, determine to perform a third retransmission of the information bit sequence, where a start position for the third retransmission is the second start position, a transmission length of the third retransmission is less than a distance between the second start position and a third start position, and the third start position is associated with the second polar code; generate a second part of the second polar code, where the second part is between the second start position and the third start position; and determine a transmission sequence for the third retransmission based on the second start position and the transmission length of the third retransmission by cycling between the second part of the second polar code, the first polar code, and the first part of the second polar code.

In some embodiments, a transmission length of the first retransmission is less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. In these embodiments, the second execution component 930 may include: a second sequence determining component, configured to determine a transmission sequence for the first retransmission based on the first start position and the transmission length by cycling between a first subpart of a first part of the second polar code and the first polar code. The first subpart is between the first start position and a last start position that is reachable by the transmission length in the second group of start positions.

In some embodiments, a transmission length of the first retransmission is greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. In these embodiments, the second execution component 930 may include: a third sequence determining component, configured to determine the transmission sequence for the first retransmission based on the first start position and the transmission length by cycling between the second polar code and the first polar code.

In some embodiments, a start position for each retransmission in a group of retransmissions of the information bit sequence may be configured by a network; or a start position for each retransmission in the group of retransmissions may be selected from the plurality of start positions based on at least one of a code rate or a puncturing ratio of the information bit sequence, and the plurality of start positions include at least one of at least one start position associated with the first polar code or at least one start position associated with the second polar code.

In some embodiments, the third execution component 940 may include: a fourth sequence determining component, configured to determine a transmission sequence for the first retransmission based on the start position and a transmission length of the retransmission by cycling over the first polar code. The second execution component 930 may include: a fifth sequence determining component, configured to determine a transmission sequence for the first retransmission based on the first start position and the transmission length by cycling between the second polar code and the first polar code. Therefore, a transmission sequence for retransmission can be determined based on a start position, a transmission length, and a cyclic range.

The apparatus 900 may select a start position for a retransmission, and determine different cyclic ranges for the retransmission based on different start positions. Therefore, a rate matching process for the retransmission can be simplified, so that retransmission sending performance is stable.

FIG. 10 is a block diagram of another communication apparatus 1000 according to an embodiment of the present disclosure. The communication apparatus 1000 may be implemented at a receiving device. The communication apparatus 1000 may be a part of the receiving device, or may be the receiving device. It should be understood that the communication apparatus 1000 may include more additional components than the shown components, or some of the shown components are omitted. This is not limited in this embodiment of the present disclosure.

As shown in FIG. 10, the communication apparatus 1000 may include a first receiving component 1010, a start position determining component 1020, a second receiving component 1030, and a third receiving component 1040. The first receiving component 1010 may be configured to receive an initial transmission of an information bit sequence based on a first polar code of the information bit sequence. The start position determining component 1020 may be configured to determine a start position for a first retransmission of the information bit sequence from a plurality of start positions for the first retransmission. The second receiving component 1030 may be configured to: if the start position for the first retransmission is a first start position associated with a second polar code of the information bit sequence, generate the second polar code, and receive the first retransmission of the information bit sequence based on at least one of the second polar code or the first polar code. The third receiving component 1040 may be configured to receive the first retransmission of the information bit sequence based on the first polar code if the start position for the first retransmission is a start position associated with the first polar code.

In some embodiments, the apparatus 1000 may further include (not shown): a fourth receiving component, configured to: after the second polar code is generated, receive a second retransmission of the information bit sequence based on at least one of the second polar code or the first polar code for the second retransmission of the information bit sequence.

In some embodiments, a transmission length of the first retransmission is less than a distance between the first start position and a second start position, and the second start position is associated with the second polar code. In these embodiments, the second receiving component 1030 may include: a generation component, configured to generate a first part of the second polar code, where the first part is between the first start position and the second start position; and a first sequence determining component, configured to determine a transmission sequence for the first retransmission based on the first start position and the transmission length by cycling between the first part of the second polar code and the first polar code.

In some embodiments, the apparatus 1000 may further include (not shown): a fifth receiving component, configured to: after the first retransmission, determine to receive a third retransmission of the information bit sequence, where a start position for the third retransmission is the second start position, a transmission length of the third retransmission is less than a distance between the second start position and a third start position, and the third start position is associated with the second polar code; generate a second part of the second polar code, where the second part is between the second start position and the third start position; and determine a transmission sequence for the third retransmission based on the second start position and the transmission length of the third retransmission by cycling between the second part of the second polar code, the first polar code, and the first part of the second polar code.

In some embodiments, a transmission length of the first retransmission is less than a distance between the first start position and a second start position, and the second start position is associated with the second polar code. The first start position and the second start position are start positions in a first group of start positions associated with the second polar code. A second group of start positions associated with the second polar code are included between the first start position and the second start position, and the second group of start positions are usable as a start position for a subsequent retransmission. In these embodiments, the second receiving component 1030 may include: a second sequence determining component, configured to determine a transmission sequence for the first retransmission based on the first start position and the transmission length by cycling between a first subpart of a first part of the second polar code and the first polar code. The first subpart is between the first start position and a last start position that is reachable by the transmission length in the second group of start positions.

In some embodiments, a transmission length of the first retransmission is greater than or equal to a distance between the first start position and an end of the second polar code. The first start position is a start position in a first group of start positions associated with the second polar code. A second group of start positions associated with the second polar code are included between the first start position and the end of the second polar code, and the second group of start positions are usable as a start position for a subsequent retransmission. In these embodiments, the second receiving component 1030 may include: a third sequence determining component, configured to determine the transmission sequence for the first retransmission based on the first start position and the transmission length by cycling between the second polar code and the first polar code.

In some embodiments, a start position for each retransmission in a group of retransmissions of the information bit sequence may be configured by a network; or a start position for each retransmission in the group of retransmissions may be selected from the plurality of start positions based on at least one of a code rate or a puncturing ratio of the information bit sequence, and the plurality of start positions include at least one of at least one start position associated with the first polar code or at least one start position associated with the second polar code.

In some embodiments, the third receiving component 1040 may include: a fourth sequence determining component, configured to determine a transmission sequence for the first retransmission based on the start position and a transmission length of the retransmission by cycling over the first polar code. The second receiving component 1030 may include: a fifth sequence determining component, configured to determine a transmission sequence for the first retransmission based on the first start position and the transmission length by cycling between the second polar code and the first polar code.

The apparatus 1000 may select a start position for a retransmission, and determine different cyclic ranges for the retransmission based on different start positions. Therefore, a rate matching process for the retransmission can be simplified, so that retransmission receiving performance is stable.

It should be understood that other operations of the communication methods 700 and 800 and the communication apparatuses 900 and 1000 are similar to the operations in the communication process 400 described with reference to FIG. 4 to FIG. 6G, and details are not described herein again.

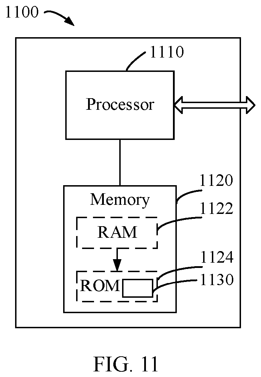

FIG. 11 is a simplified block diagram of a communication device 1100 suitable for implementing embodiments of the present disclosure. The device 1100 may be provided to implement a transmit device or a receiving device or a communication device that includes a transmitting function and a receiving function. As shown in the figure, the device 1100 includes one or more processors 1110 and one or more memories 1120 coupled to the processor 1110. Optionally, the one or more memories 1120 may alternatively be integrated with the one or more processors 1110.

The processor 1110 may be of any type suitable for a local technology network, and as a limiting example, may include one or more of the following: a general-purpose computer, a dedicated computer, a microprocessor, a digital signal processor, and a processor that is based on a multi-core processor architecture. The device 1100 may have a plurality of processors, such as an application-specific integrated circuit chip, which are temporally subordinated to a clock that is synchronized with a main processor.

The memory 1120 may include one or more non-volatile memories and one or more volatile memories. An example of the non-volatile memory includes but is not limited to a read-only memory (read-only memory, ROM) 1124, an electrically programmable read-only memory (electrically programmable read-only memory, EPROM), a flash memory, a hard disk, a compact disc (compact disc, CD), a digital video disk (digital video disc, DVD), and another magnetic storage and/or optical storage apparatus. An example of the volatile memory includes but is not limited to a random access memory (random access memory, RAM) 1122 and another volatile memory that does not persist during power-off duration.

A computer program 1130 includes computer-executable instructions performed by an associated processor 1110. The program 1130 may be stored in the ROM 1120. The processor 1110 may perform any proper action and processing by loading the program 1130 into the RAM 1120.

Embodiments of the present disclosure may be implemented by using the program 1130, so that the device 1100 performs the processing in the present disclosure as discussed with reference to FIG. 4 to FIG. 6G. The device 1100 may correspond to the communication apparatus 900 and/or the communication apparatus 1000, and functional modules in the communication apparatus 900 and/or the communication apparatus 1000 are implemented by using software of the device 1100. In other words, the functional modules included in the communication apparatus 900 and/or the communication apparatus 1000 are generated after the processor 1110 of the device 1100 reads the program code stored in the memory 1120. Embodiments of the present disclosure may alternatively be implemented by hardware or a combination of software and hardware.

In some embodiments, the program 1130 may be tangibly included in a computer-readable medium, and the computer-readable medium may be included in the device 1100 (for example, in the memory 1120) or another storage device that may be accessed by the device 1100. The program 1130 may be loaded from the computer-readable medium to the RAM 1122 for execution. The computer-readable medium may include any type of tangible non-volatile memory, for example, a ROM, an EPROM, a flash memory, a hard disk, a CD, or a DVD.

In some embodiments, the device 1100 may further include one or more communication modules (not shown). The one or more communication modules may be coupled to the processor 1110. The one or more communication modules may be configured for bidirectional communication. The one or more communication modules may have a communication interface to facilitate communication. The communication interface may represent any interface necessary for communication with another network element.

In general, the various example embodiments of the present disclosure may be implemented in hardware or dedicated circuits, software, logic, or any combination thereof. Some aspects may be implemented in hardware, while other aspects may be implemented in firmware or software that may be executed by a controller, a microprocessor, or another computing device. When various aspects of embodiments of the present disclosure are illustrated or described as block diagrams, flowcharts, or using some other graphical representation, it is understood that the blocks, apparatuses, systems, technologies, or methods described herein may be implemented as non-limiting examples in hardware, software, firmware, dedicated circuits or logic, general-purpose hardware or controllers, or other computing devices, or some combination thereof. An example of a hardware device that may be used to implement embodiments of the present disclosure includes but is not limited to a field programmable gate array (field programmable gate array, FPGA), an application-specific integrated circuit (application-specific integrated circuit, ASIC), an application-specific standard part (application-specific standard part, ASSP), a system on chip (system on chip, SoC), or a complex programmable logic device (complex programmable logic device, CPLD).

In an example, embodiments of the present disclosure may be described in the context of machine-executable instructions. For example, the machine-executable instructions are included in a program module executed in a device on a target real or virtual processor. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions used for the program module may be executed locally or in a distributed device. In the distributed device, the program module may be located in both a local storage medium and a remote storage medium.

Computer program code for implementing the method disclosed in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal. The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a RAM, a ROM, an EPROM or flash memory, an optical storage device, a magnetic storage device, or any appropriate combination thereof.

In addition, although the operations are described in a particular order, this should not be understood as requiring the operations to be completed in the particular order shown or in a sequential order, or performing all of the illustrated operations to obtain a desired result. In some cases, multitasking or parallel processing is beneficial. Likewise, although the discussion above includes some specific implementation details, this should not be construed as a limitation on the scope of any invention or claim, but rather as a description of a specific embodiment that may be directed to a particular invention. Some features described in the context of separate embodiments in this specification may also be incorporated and implemented in a single embodiment. Conversely, various features described in the context of a single embodiment may also be implemented separately in a plurality of embodiments or in any suitable sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A communication method, comprising:
performing an initial transmission of an information bit sequence based on a first polar code of the information bit sequence;
determining a start position for a first retransmission of the information bit sequence from a plurality of start positions for the first retransmission;
if the start position for the first retransmission is a first start position associated with a second polar code of the information bit sequence, generating the second polar code, and performing the first retransmission of the information bit sequence based on at least one of the second polar code or the first polar code; and
performing the first retransmission of the information bit sequence based on the first polar code if the start position for the first retransmission is a start position associated with the first polar code.

2. The method according to claim 1, further comprising:
after the second polar code is generated, performing a second retransmission of the information bit sequence based on at least one of the second polar code or the first polar code for the second retransmission of the information bit sequence.

3. The method according to claim 1, wherein a transmission length of the first retransmission is less than a distance between the first start position and a second start position, and the second start position is associated with the second polar code;
generating the second polar code comprises: generating a first part of the second polar code, wherein the first part is between the first start position and the second start position; and
performing the first retransmission of the information bit sequence based on at least one of the second polar code or the first polar code comprises: determining a transmission sequence for the first retransmission based on the first start position and the transmission length by cycling between the first part of the second polar code and the first polar code.

4. The method according to claim 3, further comprising:
after the first retransmission, determining to perform a third retransmission of the information bit sequence, wherein a start position for the third retransmission is the second start position, a transmission length of the third retransmission is less than a distance between the second start position and a third start position, and the third start position is associated with the second polar code;
generating a second part of the second polar code, wherein the second part is between the second start position and the third start position; and
determining a transmission sequence for the third retransmission based on the second start position and the transmission length of the third retransmission by cycling between the second part of the second polar code, the first polar code, and the first part of the second polar code.

5. The method according to claim 1, wherein a transmission length of the first retransmission is less than a distance between the first start position and a second start position, and the second start position is associated with the second polar code;
the first start position and the second start position are start positions in a first group of start positions associated with the second polar code;
a second group of start positions associated with the second polar code are comprised between the first start position and the second start position, and the second group of start positions are usable as a start position for a subsequent retransmission; and
performing the first retransmission of the information bit sequence based on at least one of the second polar code or the first polar code comprises: determining a transmission sequence for the first retransmission based on the first start position and the transmission length by cycling between a first subpart of the first part of the second polar code and the first polar code, wherein the first subpart is between the first start position and a last start position that is reachable by the transmission length in the second group of start positions.

6. The method according to claim 1, wherein a transmission length of the first retransmission is greater than or equal to a distance between the first start position and an end of the second polar code;
the first start position is a start position in a first group of start positions associated with the second polar code;
a second group of start positions associated with the second polar code are comprised between the first start position and the end of the second polar code, and the second group of start positions are usable as a start position for a subsequent retransmission; and
performing the first retransmission of the information bit sequence based on at least one of the second polar code or the first polar code comprises: determining a transmission sequence for the first retransmission based on the first start position and the transmission length by cycling between the second polar code and the first polar code.

7. The method according to claim 1, wherein a start position for each retransmission in a group of retransmissions of the information bit sequence is configured by a network; or
a start position for each retransmission in the group of retransmissions is selected from the plurality of start positions based on at least one of a code rate or a puncturing ratio of the information bit sequence, and the plurality of start positions comprise at least one of at least one start position associated with the first polar code or at least one start position associated with the second polar code.

8. The method according to claim 1, wherein performing the first retransmission of the information bit sequence based on the first polar code comprises: determining a transmission sequence for the first retransmission based on the start position and a transmission length of the first retransmission by cycling over the first polar code; and
performing the first retransmission of the information bit sequence based on at least one of the second polar code or the first polar code comprises: determining a transmission sequence for the first retransmission based on the first start position and the transmission length by cycling between the second polar code and the first polar code.

9. A communication method, comprising:
receiving an initial transmission of an information bit sequence based on a first polar code of the information bit sequence;
determining a start position for a first retransmission of the information bit sequence from a plurality of start positions for the first retransmission;
if the start position for the first retransmission is a first start position associated with a second polar code of the information bit sequence, generating the second polar code, and receiving the first retransmission of the information bit sequence based on at least one of the second polar code or the first polar code; and
receiving the first retransmission of the information bit sequence based on the first polar code if the start position for the first retransmission is a start position associated with the first polar code.

10. The method according to claim 9, further comprising:
after the second polar code is generated, receiving a second retransmission of the information bit sequence based on at least one of the second polar code or the first polar code for the second retransmission of the information bit sequence.

11. The method according to claim 9, wherein a transmission length of the first retransmission is less than a distance between the first start position and a second start position, and the second start position is associated with the second polar code;
generating the second polar code comprises: generating a first part of the second polar code, wherein the first part is between the first start position and the second start position; and
receiving the first retransmission of the information bit sequence based on at least one of the second polar code or the first polar code comprises: determining a transmission sequence for the first retransmission based on the first start position and the transmission length by cycling between the first part of the second polar code and the first polar code.

12. The method according to claim 11, further comprising:
after the first retransmission, determining to receive a third retransmission of the information bit sequence, wherein a start position for the third retransmission is the second start position, a transmission length of the third retransmission is less than a distance between the second start position and a third start position, and the third start position is associated with the second polar code;
generating a second part of the second polar code, wherein the second part is between the second start position and the third start position; and
determining a transmission sequence for the third retransmission based on the second start position and the transmission length of the third retransmission by cycling between the second part of the second polar code, the first polar code, and the first part of the second polar code.

13. The method according to claim 9, wherein a transmission length of the first retransmission is less than a distance between the first start position and a second start position, and the second start position is associated with the second polar code;
the first start position and the second start position are start positions in a first group of start positions associated with the second polar code;
a second group of start positions associated with the second polar code are comprised between the first start position and the second start position, and the second group of start positions are usable as a start position for a subsequent retransmission; and
receiving the first retransmission of the information bit sequence based on at least one of the second polar code or the first polar code comprises: determining a transmission sequence for the first retransmission based on the first start position and the transmission length by cycling between a first subpart of the first part of the second polar code and the first polar code, wherein the first subpart is between the first start position and a last start position that is reachable by the transmission length in the second group of start positions.

14. The method according to claim 9, wherein a transmission length of the first retransmission is greater than or equal to a distance between the first start position and an end of the second polar code;
the first start position is a start position in a first group of start positions associated with the second polar code;
a second group of start positions associated with the second polar code are comprised between the first start position and the end of the second polar code, and the second group of start positions are usable as a start position for a subsequent retransmission; and
receiving the first retransmission of the information bit sequence based on at least one of the second polar code or the first polar code comprises: determining the transmission sequence for the first retransmission based on the first start position and the transmission length by cycling between the second polar code and the first polar code.

15. The method according to claim 9, wherein a start position for each retransmission in a group of retransmissions of the information bit sequence is configured by a network; or
a start position for each retransmission in the group of retransmissions is selected from the plurality of start positions based on at least one of a code rate or a puncturing ratio of the information bit sequence, and the plurality of start positions comprise at least one of at least one start position associated with the first polar code or at least one start position associated with the second polar code.

16. The method according to claim 9, wherein receiving the first retransmission of the information bit sequence based on the first polar code comprises: determining a transmission sequence for the first retransmission based on the start position and a transmission length of the first retransmission by cycling over the first polar code; and
receiving the first retransmission of the information bit sequence based on at least one of the second polar code or the first polar code comprises: determining a transmission sequence for the first retransmission based on the first start position and the transmission length by cycling between the second polar code and the first polar code.

17. A communication device, comprising:
a processor; and
a memory, comprising computer program code, wherein
when the computer program code is run by the processor, the method according to any one of claims 1 to 8 or any one of claims 9 to 16 is performed.

18. A communication apparatus, comprising a component configured to perform the method according to any one of claims 1 to 8 or any one of claims 9 to 16.

19. A computer-readable storage medium, comprising machine-executable instructions, wherein when the machine-executable instructions are executed by a device, the method according to any one of claims 1 to 8 or any one of claims 9 to 16 is performed.

20. A computer program product, comprising a computer program, wherein when the computer program is run on an apparatus, the method according to any one of claims 1 to 8 or any one of claims 9 to 16 is performed.
